# FASCICULE DE BREVET EUROPEEN

(11) **EP 1 198 191 B1**
(45) Date de publication et mention de la délivrance du brevet: **30.07.2003**
(21) Numéro de dépôt: 00949638.1
(22) Date de dépôt: 05.07.2000
(51) Int. Cl.: A47J 43/08

(54) **BATTEUR-MIXEUR ELECTRIQUE A MAIN**
ELEKTRISCH BETRIEBENER HANDSCHLÄGER UND RÜHRER
HAND OPERATED ELECTRIC WHISK/MIXER

(30) Priorité: 05.07.1999 FR 9908755
(43) Date de publication de la demande: 24.04.2002
(73) Titulaire: SEB S.A., 69130 Ecully (FR)
(72) Inventeur: MARRIERE, Marc, F-53300 Ambrières les Vallées (FR); BEAUDET, Jean-Yves, F-61400 Haleine (FR)
(74) Mandataire: Kiehl, Hubert
(86) Numéro de dépôt international: FR0001926
(87) Numéro de publication internationale: WO01001831

(56) Documents cités:
- FR-A- 2 730 623
- US-A- 5 316 382

## Description

La présente invention concerne un batteur-mixeur électrique à main, notamment un batteur-mixeur ménager, destiné à entraîner de manière sélective au moins un accessoire dit de battage tel que, par exemple, un fouet, ou un accessoire dit de mixage tournant à vitesse élevée tel que, par exemple, un pied mixeur, et comportant un corps contenant un moteur d'entraînement électrique, un dispositif rotatif d'accouplement relié à l'arbre du moteur et destiné à la fixation et à l'entraînement de l'accessoire de mixage, lequel dispositif d'accouplement communique avec l'extérieur du corps par une ouverture d'accouplement pratiquée dans le corps et destinée à l'engagement de l'accessoire de mixage, et un obturateur associé à ladite ouverture d'accouplement. Un tel batteur-mixeur est connu de FR-A- 2 730 623.

On entend par accessoire de battage un outil de travail du type fouet ou malaxeur, et par accessoire de mixage un accessoire à outil de travail tournant à vitesse élevée du type pied mixeur à hélice rotative, ou encore du type bol mixeur à couteau rotatif.

Dans un appareil connu de ce genre, l'obturateur est généralement utilisé pour protéger le moteur à l'égard de l'introduction de poussières ou autres en l'absence de l'accessoire de mixage et, à cet effet, il est réalisé d'une seule pièce et est monté coulissant dans le corps à l'aide d'un organe de manoeuvre manuelle qui fait saillie à travers l'ouverture d'accouplement. L'obturateur est ainsi déplaçable manuellement entre une position fermée dans laquelle il obture l'ouverture d'accouplement, et ce dans un souci de protection du moteur et de sécurité d'utilisation, et une position ouverte dans laquelle il découvre l'ouverture d'accouplement pour permettre la mise en place de l'accessoire de mixage. Cet obturateur à commande manuelle est toutefois d'un emploi guère commode et contraignant pour l'utilisateur.

L'invention a pour but de réaliser un batteur-mixeur électrique à main, du type exposé ci-dessus, dans lequel l'obturateur associé à l'ouverture d'accouplement soit d'un emploi simple et aisé, et d'une conception parfaitement adaptée à une fabrication en grande série.

Selon l'invention, l'obturateur est formé par au moins deux volets mobiles entre une position de fermeture dans laquelle ils sont rapprochés l'un de l'autre en l'absence de l'accessoire de mixage, et une position d'ouverture dans laquelle ils sont écartés l'un de l'autre, vers l'intérieur du corps, sous l'action directe de l'accessoire de mixage lors de l'engagement de ce dernier dans l'ouverture d'accouplement, lesdits volets revenant automatiquement en position de fermeture après retrait de l'accessoire de mixage.

Ainsi, grâce à ces deux volets mobiles, on comprend que l'ouverture de l'obturateur est désormais commandée directement par l'accessoire de mixage lors de sa mise en place, tandis que sa fermeture est, elle, entièrement automatique, ne nécessitant donc plus aucune opération manuelle pour ouvrir et fermer l'obturateur, contrairement à l'art antérieur, ce qui procure à l'utilisateur une grande commodité d'emploi et lui permet même de monter en aveugle l'accessoire de mixage dans l'appareil.

Dans un mode d'exécution préféré de l'invention, les deux volets sont montés pivotants dans le corps respectivement autour de deux axes parallèles situés de part et d'autre de l'axe de rotation du dispositif d'accouplement et s'étendant ensemble dans un plan transversal au plan passant par ledit axe de rotation, les deux volets étant sollicités ensemble par des moyens de rappel élastique qui tendent à les rappeler en position de fermeture après retrait de l'accessoire de mixage. Un tel montage des deux volets, assimilable à une porte de saloon, est d'une réalisation simple et d'une grande fiabilité.

Les caractéristiques et avantages de l'invention ressortiront de la description qui va suivre, prise à titre d'exemple non limitatif, en référence aux dessins annexés dans lesquels :
- la figure 1 est une vue partielle en coupe verticale d'un batteur-mixeur selon l'invention, sans accessoire monté ;
- la figure 2 est une vue schématique en perspective, à échelle agrandie, d'un obturateur en position fermée équipant le batteur-mixeur de la figure 1 et vu de l'intérieur de l'appareil ;
- la figure 3 est une vue identique à la figure 2, montrant l'obturateur en position ouverte ; et
- la figure 4 est une vue identique à la figure 1, après montage d'un accessoire de mixage.

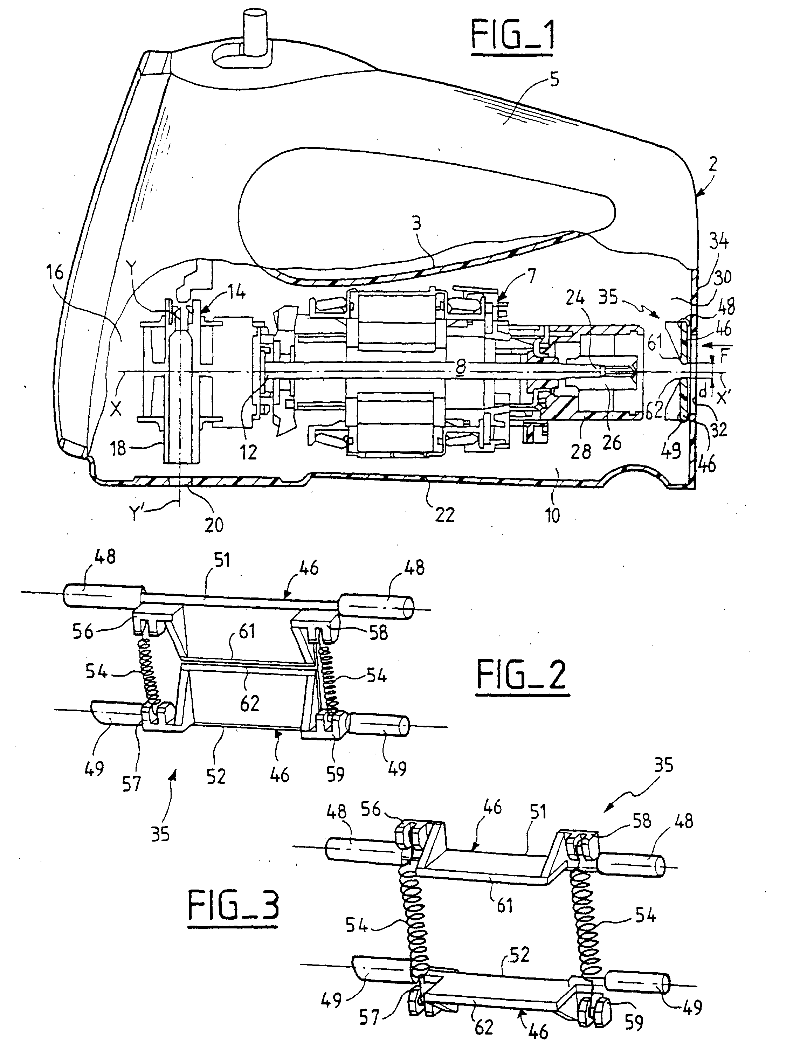

Le batteur-mixeur à main illustré à la figure 1 comprend un corps 2 de forme générale sensiblement prismatique présentant une partie évidée 3 qui délimite une poignée 5, et contenant un moteur d'entraînement électrique 7 muni d'un arbre 8 d'axe XX' et logé, en utilisation normale avec au moins un accessoire dit de battage tel que, par exemple, un fouet, dans la partie inférieure 10 du corps 2 en s'étendant horizontalement.

Dans l'exemple de réalisation représenté à la figure 1, l'arbre 8 du moteur d'entraînement 7 porte à son extrémité antérieure 12 une vis sans fin non représentée qui coopère avec deux pignons hélicoïdaux tournant chacun autour d'un axe vertical YY' perpendiculaire à l'axe XX', et qui forme avec ceux-ci un réducteur 14. Ces deux pignons hélicoïdaux sont situés dans la partie avant 16 au corps 2 et sont liés respectivement à deux dispositifs rotatifs d'accouplement 18 d'axe YY', dont un seul est visible à la figure 1, qui communiquent avec l'extérieur du corps 2 par deux ouvertures d'accouplement 20 pratiquées dans la paroi inférieure 22 du corps 2 et destinées à l'engagement côte à côte, ou l'un derrière l'autre, de deux fouets non représentés.

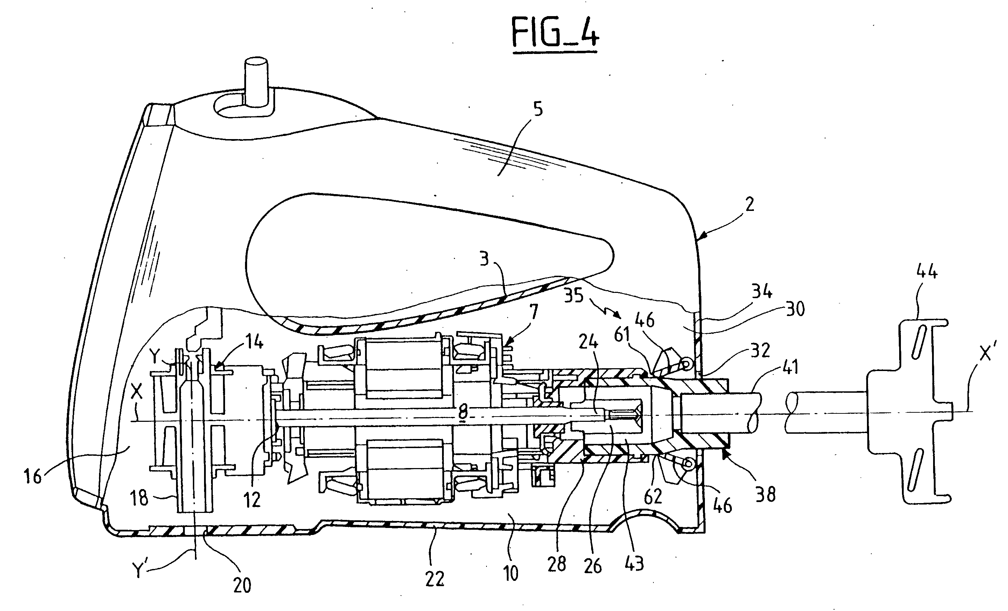

Dans cet exemple, figure 1, l'arbre 8 du moteur d'entraînement 7 porte coaxialement à son extrémité postérieure 24 un dispositif rotatif d'accouplement 26 formant un entraîneur logé dans un fût cylindrique 28 qui s'étend horizontalement dans la partie arrière 30 du corps 2 et qui communique avec l'extérieur du corps 2 par une ouverture d'accouplement 32, de forme circulaire, pratiquée dans la paroi arrière 34 du corps 2 et associée à un obturateur, désigné par la référence globale 35 sur les figures 1 et 4. Cette ouverture 32 est destinée à l'engagement d'un accessoire de mixage tournant à vitesse élevée tel que, par exemple, un pied mixeur 38 comme représenté à la figure 4, lequel pied mixeur 38 étant destiné à venir se fixer, par exemple par vissage, dans le fût 28 et renfermant un arbre cylindrique d'entraînement 41 (figure 4) dont l'extrémité dite antérieure 43, opposée à la cloche 44 logeant une hélice non figurée, est adaptée à venir s'accoupler avec l'entraîneur 26.

Selon l'invention, l'obturateur 35 est formé par au moins deux volets 46 mobiles entre une position de fermeture (figure 1) dans laquelle ils sont rapprochés l'un de l'autre en l'absence du pied mixeur, et une position d'ouverture (figure 4) dans laquelle ils sont écartés l'un de l'autre, vers l'intérieur du corps 2, sous l'action directe du pied mixeur 38 lors de l'engagement de celui-ci dans l'ouverture d'accouplement 32, les volets 46 revenant automatiquement en position de fermeture (figure 1) après retrait du pied mixeur 38.

Dans un mode d'exécution préféré, les volets 46 sont au nombre de deux, présentent une forme identique rectangulaire et sont montés pivotants dans le corps 2 respectivement autour de deux axes parallèles 48, 49 (figures 2 et 3) situés de part et d'autre de l'axe XX' et s'étendant ensemble dans un plan transversal au plan passant par l'axe XX'. En regard de la figure 2, les deux axes de pivotement 48, 49 des volets rectangulaires 46 s'étendent respectivement sur les deux grands côtés horizontaux, respectivement supérieur 51 et inférieur 52, des deux volets 46.

Comme on le voit bien sur les figures 2 et 3, les deux volets 46 sont sollicités ensemble par des moyens de rappel élastique constitués présentement par deux ressorts identiques de traction 54 qui sont interposés chacun à entretoisement entre deux épaulements 56, 57 et respectivement 58, 59 formés latéralement sur les volets 46, et qui s'étendent de part et d'autre des deux volets 46 suivant une même direction transversale aux axes de pivotement 48, 49 des volets.

Dans la position d'arrêt du batteur-mixeur, en l'absence de tout accessoire, comme illustré à la figure 1, les deux volets 46 occupent une position fermée dans laquelle ils obturent l'ouverture d'accouplement 32 pour empêcher l'introduction de toute poussière ou autre, et s'étendent, par leurs deux autres grands côtés horizontaux libres et conjugués 61, 62, en regard et à légère distance d (figure 1) l'un de l'autre. Dans leur position fermée, les deux volets 46 définissent ensemble un rectangle dans lequel s'inscrit l'ouverture circulaire 32.

Pour effectuer la mise en place par vissage au pied mixeur, l'utilisateur engage, en aveugle s'il le souhaite, le pied mixeur dans l'ouverture 32 suivant le sens de la flèche F de la figure 1. Par son extrémité antérieure, le pied mixeur 38 (figure 4) actionne directement les deux volets 46, à l'encontre des deux ressorts de traction 54, qui pivotent autour de leurs axes 48, 49 pour s'écarter l'un de l'autre vers l'intérieur du corps 2, à la manière d'une porte de saloon, comme montré à la figure 3. Les deux volets 46 ainsi ouverts permettent le vissage du pied mixeur 38 dont l'arbre 41 vient s'accoupler avec l'entraîneur 26 ; en fin de course de vissage du pied mixeur 38, comme le montre la figure 4, les deux volets 46 en position ouverte sont en appui, par leur bord horizontal libre 61 ; 62, contre l'extrémité antérieure du pied mixeur 38.

A partir de la position de montage du pied mixeur 38 de la figure 4, le pied mixeur peut être simplement retiré par dévissage ; dès le retrait du pied mixeur 38, les deux volets 46 reviennent alors, sous l'action des deux ressorts de traction 54, dans leur position fermée telle que montrée aux figures 1 et 2.

## Revendications

1. Batteur-mixeur électrique à main destiné à entraîner de manière sélective au moins un accessoire dit de battage tel que, par exemple, un fouet, ou un accessoire dit de mixage tournant à vitesse élevée (38) tel que, par exemple, un pied mixeur, comportant un corps (2) contenant un moteur d'entraînement électrique (7), un dispositif rotatif d'accouplement (26) relié à l'arbre (8) du moteur (7) et destiné à la fixation et à l'entraînement de l'accessoire de mixage (38), lequel dispositif d'accouplement (26) communique avec l'extérieur du corps par une ouverture d'accouplement (32) pratiquée dans le corps (2) et destinée à l'engagement de l'accessoire de mixage (38), et un obturateur (35) associé à ladite ouverture d'accouplement (32),
**caractérisé en ce que** l'obturateur (35) est formé par au moins deux volets (46) mobiles entre une position de fermeture dans laquelle ils sont rapprochés l'un de l'autre en l'absence de l'accessoire de mixage, et une position d'ouverture dans laquelle ils sont écartés l'un de l'autre, vers l'intérieur du corps (2), sous l'action directe de l'accessoire de mixage (38) lors de l'engagement de ce dernier dans l'ouverture d'accouplement (32), lesdits volets (46) revenant automatiquement en position de fermeture après retrait de l'accessoire de mixage (38).

2. Batteur-mixeur selon la revendication 1,
**caractérisé en ce que** les deux volets (46) sont montés pivotants dans le corps (2) respectivement autour de deux axes parallèles (48, 49) situés de part et d'autre de l'axe de rotation (XX') du dispositif d'accouplement (26) et s'étendant ensemble dans un plan transversal au plan passant par ledit axe de rotation (XX'), les deux volets (46) étant sollicités ensemble par des moyens de rappel élastique (54) qui tendent à les rappeler en position de fermeture après retrait de l'accessoire de mixage (38).

3. Batteur-mixeur selon la revendication 2,
**caractérisé en ce que** les moyens de rappel élastique sont constitués par deux ressorts de traction (54) qui sont interposés chacun à entretoisement entre deux épaulements (56, 57 ; 58, 59) formés latéralement sur les deux volets (46), et qui s'étendent de part et d'autre des deux volets suivant une même direction transversale à l'axe de pivotement (48 ; 49) de chacun des deux volets (46).

4. Batteur-mixeur selon la revendication 2 ou 3, dans lequel l'ouverture d'accouplement (32) est de forme circulaire,
**caractérisé en ce que** les deux volets (46) sont identiques et présentent une forme rectangulaire dont l'un des grands côtés (51 ; 52) porte l'axe de pivotement correspondant (48 ; 49), et dont les deux autres grands côtés conjugués (61, 62), en position de fermeture des deux volets (46), s'étendent en regard et à légère distance l'un de l'autre, les deux volets (46) en position de fermeture définissant ensemble un rectangle dans lequel s'inscrit l'ouverture circulaire d'accouplement (32).

5. Batteur-mixeur selon l'une quelconque des revendications précédentes, dans lequel l'accessoire de mixage (38) comporte un arbre d'entraînement (41) dont une extrémité est adaptée à venir s'accoupler avec le dispositif d'accouplement (26),
**caractérisé en ce que ,** après insertion de l'accessoire de mixage (38) dans le dispositif d'accouplement (26), les deux volets (46) en position d'ouverture sont en appui par leur bord libre (61 ; 62) contre l'arbre (41) de l'accessoire de mixage (38).

## Patentansprüche

1. Elektrisches Hand-Rühr- und Mixgerät zum selektiven Antrieb mindestens eines sogenannten Schlag- und Rühransatzes, wie beispielsweise eines Quirls, oder eines sogenannten Mixansatzes (38), der sich mit hoher Geschwindigkeit dreht, wie beispielsweise eines Stabmixers, mit einem Körper (2), der einen elektrischen Antriebsmotor (7), eine mit der Welle (8) des Motors verbundene drehbare Kupplungsvorrichtung (26), die zur Befestigung und zum Antrieb des Mixansatzes (38) dient, wobei die Kupplungsvorrichtung (26) mit der Umgebung des Körpers durch eine Kupplungsöffnung (32) in Verbindung steht, im Körper (2) ausgebildet ist und zum Eingriff des Mixansatzes (38) dient, und einen Verschluß (35), der mit der Kupplungsöffnung (12) zusammenwirkt, enthält, **dadurch gekennzeichnet, daß** der Verschluß (35) von mindestens zwei Flügeln (46) gebildet ist, die zwischen einer Schließstellung, in der sie in Abwesenheit des Mixansatzes einander angenähert sind, und einer Öffnungsteilung beweglich sind, in der sie unter der direkten Einwirkung des Mixansatzes (38) bei dessen Eingriff in die Kupplungsöffnung (32) zum Inneren des Körpers (2) hin voneinander entfernt sind, wobei die Flügel (46) nach dem Zurückziehen des Mixansatzes (38) automatisch in die Schließstellung zurückkehren.

2. Hand-Rühr- und Mixgerät nach Anspruch 1, **dadurch gekennzeichnet, daß** die zwei Flügel (46) im Körper (2) jeweils um zwei parallele Achsen (48, 49) schwenkbar montiert sind, die beiderseits der Drehachse (XX') der Kupplungsvorrichtung (26) liegen und sich zusammen in einer Ebene erstrecken, die quer zu der durch die Drehachse (XX') gehenden Ebene liegt, wobei die zwei Flügel (46) zusammen durch elastische Rückstellvorrichtungen (54) beaufschlagt sind, welche danach streben, sie nach dem Zurückziehen des Mixansatzes (38) in die Schließstellung zurückzuholen.

3. Hand-Rühr- und Mixgerät nach Anspruch 2, **dadurch gekennzeichnet, daß** die elastischen Rückstellvorrichtungen aus zwei Zugfedern (54) bestehen, die jede zwischen zwei seitlich an den zwei Flügeln (46) ausgebildeten Schultern (56, 57; 58, 59) angeordnet und verankert sind und sich beiderseits der zwei Flügel gemäß ein und derselben Richtung erstrecken, die quer zur Schwenkachse (48, 49) jedes der zwei Flügel (46) verläuft.

4. Hand-Rühr- und Mixgerät nach Anspruch 2 oder 3, worin die Kupplungsöffnung (32) kreisförmig ist, **dadurch gekennzeichnet, daß** die zwei Flügel (46) identisch sind und eine rechteckige Form haben , wobei die eine der großen Seite (51; 52) die entsprechende Schwenkachse (48; 49) trägt und die zwei anderen konjugierten Längsseiten (61, 62) in der Schließstellung der zwei Flügel (46) sich einander gegenüber und in geringem Abstand voneinander erstrecken und die zwei Flügel (46) in der Schließstellung miteinander ein Rechteck definieren, in dem die kreisförmige Kupplungsöffnung (32) liegt.

5. Hand-Rühr- und Mixgerät nach einem der vorangehenden Ansprüche, worin der Mixansatz (38) eine Antriebswelle (41) aufweist, von der ein Ende zum Ankuppeln mit der Kupplungsvorrichtung (26) ausgebildet ist, **dadurch gekennzeichnet, daß** nach dem Einsetzen des Mixansatzes (38) in die Kupplungsvorrichtung (26) die zwei Flügel (46) in ihrer Öffnungstellung mit ihrem freien Rand (61; 62) gegen die Welle (41) des Mixansatzes (38) anliegen.

## Claims

1. Electric hand whisk / mixer intended to drive selectively at least an accessory termed "whisking" such as, for example, a whisk, or an accessory termed "mixing" rotating at high speed (38) such as, for example, a mixer base, incorporating a body (2) containing an electric motor (7), a rotating coupling device (26) linked to the shaft (8) of the motor (7) and intended for the fixing and driving of the mixing accessory (38), said coupling device (26) communicating with the exterior of the body via a coupling opening (32) made in the body (2) and intended for the engagement of the mixing accessory (38), and an obturator (35) associated with said coupling opening (32) **characterized in that** the obturator (35) is formed by at least two flaps (46) movable between a close position in which they approach one another if the mixing accessory is absent, and an open position in which they are mutually displaced towards the interior of the body (2), under the direct action of the mixing accessory (38), when the latter engages in the coupling opening (32), the said flaps (46) returning automatically to the close position after the mixing accessory (38) is withdrawn.

2. Whisk / mixer according to claim 1, **characterized in that** the two flaps (46) are mounted in the body (2) so as to pivot respectively about two parallel axes (48, 49) either side of the axis of rotation (XX') of the coupling device (26), and extending together into a plane transverse to the plane passing through the said axis of rotation (XX'), the two flaps (46) being pulled together by elastic return means (54) which tend to return them into close position after the mixing accessory (38) is withdrawn.

3. Whisk / mixer according to claim 2, **characterized in that** the elastic return means are formed by two traction springs (54) which are each interposed between two supporting shoulders (56, 57 ; 58, 59) formed laterally over the two flaps (46), and which extend either side of the two flaps following a single direction transverse to the axis of pivoting (48 ; 49) for each of the two flaps (46).

4. Whisk / mixer according to claim 2 or 3, in which the coupling opening (32) is circular in shape, **characterized in that** the two flaps (46) are identical and rectangular in shape, where one of the long sides (51 ; 52) carries the corresponding pivoting axis (48 ; 49), and where the two other conjugate long sides (61 ; 62), when the two flaps (46) are in the close position, are extended relative to and are slightly apart from each other, the two flaps (46) in the close position defining together a rectangle in which the circular coupling opening (32) is inscribed.

5. Whisk / mixer according to anyone of the preceding claim, in which the mixing accessory (38) includes a drive shaft (41) with one end adapted for coupling with the coupling device (26), **characterized in that**, after the mixing accessory (38) is inserted into the coupling device (26), the two flaps (46) are supported in the open position by their free edge (61 ; 62) being in contact with the shaft (41) of the mixing accessory (38).
